(19) Europäisches Patentamt / European Patent Office / Office européen des brevets

(11) **EP 4 502 870 A1**

(12) **EUROPEAN PATENT APPLICATION**

(43) Date of publication:
05.02.2025 Bulletin 2025/06

(21) Application number: 23189842.0

(22) Date of filing: 04.08.2023

(51) International Patent Classification (IPC):
$G06N\ 3/092^{(2023.01)}$ $G06N\ 20/20^{(2019.01)}$

(52) Cooperative Patent Classification (CPC):
G06N 3/092; G06N 3/006; G06N 3/045; G06N 3/08;
G06N 7/01; G06N 20/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Robert Bosch GmbH
70442 Stuttgart (DE)

(72) Inventors:
• Vinogradska, Julia
70839 Gerlingen (DE)
• Peters, Jan
64342 Seeheim-Jugenheim (OT Malchen) (DE)
• Berkenkamp, Felix
80335 Muenchen (DE)
• Bottero, Alessandro Giacomo
70193 Stuttgart (DE)
• Luis Goncalves, Carlos Enrique
70192 Stuttgart (DE)

(54) **DEVICE AND METHOD FOR TRAINING A CONTROL POLICY FOR CONTROLLING A TECHNICAL SYSTEM**

(57) According to various embodiments, a method for training a control policy for controlling a technical system is described, comprising controlling the technical system and observing state transitions of the technical system in response to controlling the technical system and observing rewards received from the state transitions, adapting a transition dynamic distribution model modelling a distribution of the dynamics of the technical system to the observed state transitions, sampling a transition dynamic from the transition dynamic distribution model, updating a value function distribution model modelling a distribution of a value function of states or state-action pairs of the technical system by estimating the value of a state using the sampled transition dynamic and updating the control strategy using the updated value function distribution model.

Fig. 3

EP 4 502 870 A1

**Description**

The present disclosure relates to devices and methods for training a control policy for controlling a technical system.

Reinforcement Learning (RL) is a machine learning paradigm that allows a machine to learn to perform desired behaviours with respect to a task specification, e.g. which control actions to take to reach a goal location in a robotic navigation scenario. Learning a policy that generates these behaviours with reinforcement learning differs from learning it with supervised learning in the way the training data is composed and obtained: While in supervised learning the provided training data consists of matched pairs of inputs to the policy (e.g. observations like sensory readings) and desired outputs (actions to be taken), there is no fixed training data provided in case of reinforcement learning. The policy is learned from experience data gathered by interaction of the machine with its environment whereby a feedback (reward) signal is provided to the machine that evaluates the action which is taken in a certain state and which leads to a subsequent state according to the respective transition dynamics.

Reinforcement learning (RL) tackles optimal decision-making in an unknown Markov Decision Process (MDP). Uncertainty is at the heart of the RL problem: on one hand, aleatoric uncertainty refers to the stochasticity in the MDP state transitions and the RL agent's action selection; on the other hand, epistemic uncertainty appears due to lack of knowledge about the MDP (including transition dynamics). During policy evaluation, both sources of uncertainty induce a distribution of possible returns, which should be considered for policy optimization. For instance, in high-stakes applications like medical treatments, accounting for aleatoric noise is key towards training risk-averse policies. Similarly, effective exploration can be achieved by proper handling of epistemic uncertainty.

Accordingly, approaches for handling uncertainty in reinforcement learning, in particular uncertainty regarding transition dynamics, are desirable.

According to various embodiments, a method for training a control policy for controlling a technical system is provided, comprising controlling the technical system and observing state transitions of the technical system in response to controlling the technical system and observing rewards received from the state transitions, adapting a transition dynamic distribution model modelling a distribution of the dynamics of the technical system to the observed state transitions, sampling a transition dynamic from the transition dynamic distribution model, updating a value function distribution model modelling a distribution of a value function of states or state-action pairs of the technical system by estimating the value of a state using the sampled transition dynamic and updating the control strategy using the updated value function distribution model.

The method described above allows taking into account uncertainty, in particular epistemic uncertainty regarding the transition dynamics (and uncertainty of values of states (or state-action pairs) resulting from the uncertainty of the transition dynamics), in a reinforcement learning scenario (e.g. in an actor-critic scheme) and thus allows better training of the control strategy. In particular, uncertainty in such a context may be quantified and the resulting uncertainty representation may be leveraged to guide the control policy training process in order to effectively explore the environment and improve sample efficiency. This is useful in practical application because in many applications (especially involving physical systems) gathering data is expensive, and the amount of interactions with the controlled system for training a control policy should typically be minimized. The distribution of values may be represented with a single neural network (rather than for example with an ensemble of critics).

In the following, various exemplary embodiments are given.

Embodiment 1 is the method for training a control policy for controlling a technical system as described above.

Embodiment 2 is the method of embodiment 1, wherein the value function distribution model is updated by estimating the value of a state as a sum of a reward observed when entering the state with a state transition and a discounted sum of values of subsequent states sampled from the (un-updated) value function distribution model, wherein each sampled value is weighed by a probability given by the sampled dynamics model that the subsequent state is reached (and updating the value function distribution model to better represent the estimated value (at least in average over multiple states and/or estimates).

So, the sampled dynamics model and the sampled values may be used to update the distribution of the value function in the manner of an update of a value function in the sense of a Bellman equation.

Embodiment 3 is the method of embodiment 1 or 2, wherein the value function distribution model is a quantile distribution which maps each of the states to a uniform probability distribution supported on estimates of quantiles of the value of the state.

This allows an efficient projection of the value function distribution on a finite-dimensional parameter space and in particular an efficient update of the value function distribution model.

Embodiment 4 is the method of any one of embodiments 1 to 3, wherein updating the control strategy using the updated value function distribution model comprises using the updated value function distribution model for a critic of an actor-critic reinforcement learning scheme, wherein the actor corresponds to the control strategy.

In other words, a distributional critic in an actor-critic RL scheme is used. This allows efficient reinforcement learning with consideration of uncertainty regarding transition dynamics.

Embodiment 5 is the method of any one of embodiments 1 to 4, wherein the transition dynamic distribution model comprises an ensemble of neural networks, each neural network implementing a respective transition dynamic model (sampling from the transition dynamic distribution model for example comprises uniformly sampling from the neural networks).

This allows efficient training of the transition dynamic distribution model and sampling therefrom.

Embodiment 6 is a method for controlling a technical system, comprising training a control policy according to any one of embodiments 1 to 5 and controlling the technical system according to the trained control policy.

Embodiment 7 is a controller (for a technical system) configured to perform a method of any one of embodiments 1 to 6.

Embodiment 8 is a computer program comprising instructions which, when executed by a computer, makes the computer perform a method according to any one of embodiments 1 to 6.

Embodiment 9 is a computer-readable medium comprising instructions which, when executed by a computer, makes the computer perform a method according to any one of embodiments 1 to 6.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows a control scenario according to an embodiment.

Figure 2    illustrates an example of an Markov Decision Process, a transition function prior and the value distribution it induces.

Figure 3    shows a flow diagram illustrating a method for training a control policy for controlling a technical system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

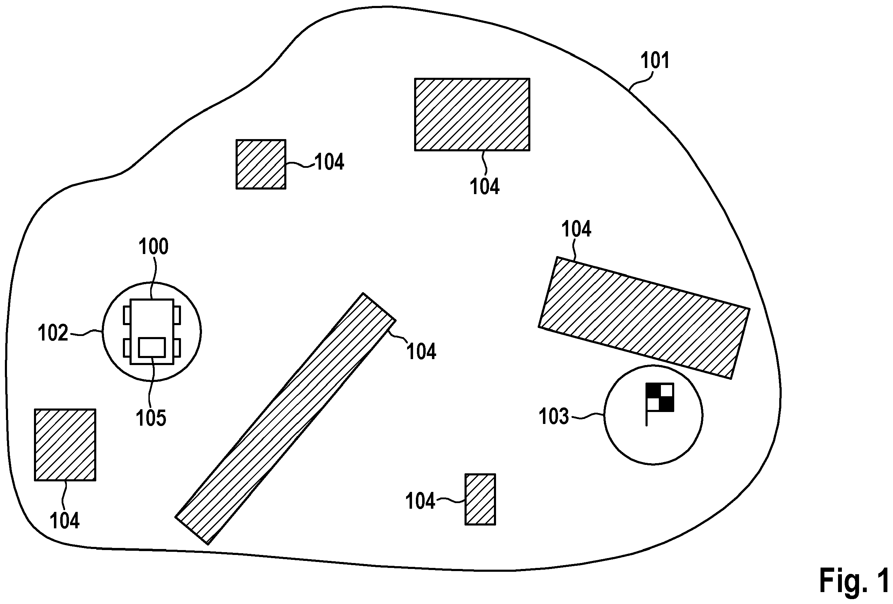

Figure 1 shows a control scenario.

A robot 100 is located in an environment 101. The robot 100 has a start position 102 and should reach a goal position 103. The environment 101 contains obstacles 104 which should be avoided by the robot 100. For example, they may not be passed by the robot 100 (e.g. they are walls, trees or rocks) or should be avoided because the robot would damage or hurt them (e.g. pedestrians).

The robot 100 has a controller 105 (which may also be remote to the robot 100, i.e. the robot 100 may be controlled by remote control). In the exemplary scenario of figure 1, the goal is that the controller 105 controls the robot 100 to navigate the environment 101 from the start position 102 to the goal position 103. For example, the robot 100 is an autonomous vehicle but it may also be a robot with legs or tracks or other kind of propulsion system (such as a deep sea or mars rover).

Furthermore, embodiments are not limited to the scenario that a robot should be moved (as a whole) between positions 102, 103 but may also be used for the control of a robotic arm whose end-effector should be moved between positions 102, 103 (without hitting obstacles 104) etc.

Accordingly, in the following, terms like robot, vehicle, machine, etc. are used as examples for the "object", i.e. computer-controlled technical system (e.g. machine), to be controlled. The approaches described herein can be used with different types of computer-controlled machines like robots or vehicles and other (and possibly their environment). The general term "robot device" is also used in the following to refer to all kinds of technical system which may be controlled by the approaches described in the following.

Ideally, the controller 105 has learned a control policy that allows it to control the robot 101 successfully (from start position 102 to goal position 103 without hitting obstacles 104) for arbitrary scenarios (i.e. environments, start and goal positions) in particular scenarios that the controller 105 has not encountered before.

Various embodiments thus relate to learning a control policy for a specified (distribution of) task(s) by interacting with the environment 101. In training, the scenario (in particular environment 101) may be simulated but it will typically be real in deployment. However, also in deployment, the agent and the environment may still be simulated (such as in the case where a simulation of vehicles (according to the control policy) serves for testing a control policy of an autonomous vehicle).

An approach to learn a control policy is reinforcement learning (RL) where the robot 100, together with its controller 105, acts as reinforcement learning agent. The robot 100 is an example of a technical system. The technical system may also correspond to the robot together with the environment 101, since control actions may also have impact on the environment, for example in a scenario where a robot arm moves objects. Accordingly, a state of the technical system may include information about a robot state as well as an environment state depending on the application.

According to various embodiments, an agent is considered that acts in an infinite-horizon MDP $\mathcal{M} = \{S, A, p, r, \gamma\}$ with finite state space $S$, finite action space $A$, unknown transition function $p: S \times A \to \mathcal{P}(S)$ that maps states and actions to the set of probability distributions over $S$, a known (or trained) and bounded reward function $r: S \times A \to \mathbb{R}$, and a discount factor $\gamma \in [0,1)$. The agent is equipped with an action-selection stochastic policy $\pi: S \to \mathcal{P}(A)$ defining the conditional probability distribution $\pi(a \mid s)$, $(s,a) \in S \times A$. Given an initial state $s \in S$ and some policy $\pi$, the RL agent interacts with the environment and generates a random trajectory $T = \{S_h, A_h, R_h\}_{h=0}^{\infty}$, with $S_0 = s$ and $A_h \sim \pi(\cdot \mid S_h)$, $R_h = r(S_h, A_h)$, $S_{h+1} \sim p(\cdot \mid S_h, A_h)$ for $t \geq 0$.

The return of a control policy, denoted $Z^\pi$, is a random variable defined as the discounted sum of rewards along a trajectory, $Z^\pi(s) = \sum_{h=0}^{\infty} \gamma^h R_h$. The randomness in trajectories and returns originates from the inherent stochasticity of the environment dynamics and the policy, oftentimes called aleatoric uncertainty. A common objective for the RL agent is to maximize the expected return, where an average over this aleatoric noise is taken to obtain a deterministic function known as the value. The value function of policy $\pi$ under dynamics $p$, starting from $s \in S$ is defined as a map $v^{\pi,p}: S \to R$ and is given by

$$v^{\pi,p}(s) = \mathbb{E}_T \left[ \sum_{h=0}^{\infty} \gamma^h R_h \,\middle|\, S_0 = s, p \right] \tag{1}$$

where there is an explicitly conditioning on the dynamics $p$; although redundant in the standard RL setting, this notation will become convenient later on when a distribution over dynamics is considered.

In contrast to learning the value function, return-distributional RL aims to learn the entire distribution of returns by leveraging the random variable return-distributional Bellman equation

$$Z^\pi(s) \stackrel{D}{=} r(s, A) + \gamma Z^\pi(S') \tag{2}$$

where $A \sim \pi(\cdot \mid s)$, $S' \sim p(\cdot \mid s, A)$ and $\underline{D}$ denotes equality in distribution, i.e., the random variables in both sides of the equation may have different outcomes, but they share the same probability distribution.

According to various embodiments, a Bayesian perspective is taken and the unknown dynamics $p$ are modelled as a random transition function $P$ with some prior distribution $\Phi(P)$. As the agent acts in $M$, it collects data $\mathcal{D}$ and obtains the posterior distribution $\Phi(P \mid \mathcal{D})$ via Bayes' rule. In what follows, it is assumed that $P \sim \Phi(P \mid \mathcal{D})$ and trajectories $T$ defined as previously are considered but with next-states as $S_{h+1} \sim P(\cdot \mid S_h, A_h)$. Notably, the sampling process of next states mixes two sources of uncertainty: the aleatoric noise, as with the original MDP, but also the uncertainty in P due to finite data, often called epistemic uncertainty. Consequently, the aleatoric and epistemic noise in trajectories propagates to the returns. For the following, the random value function of policy $\pi$ under random dynamics $P$ is defined as

$$V^\pi(s) = v^{\pi,P}(s). \tag{3}$$

By equation (1), $V^\pi$ is an expectation over the trajectories T conditioned on the random variable $P$, which means the aleatoric noise of trajectories is averaged out, but the epistemic uncertainty (due to the conditioning on $P$) remains and is propagated to $V^\pi$. Intuitively, to obtain a sample from $V^\pi$ is equivalent to sample from the posterior $\Phi(P \mid \mathcal{D})$ and calculate the corresponding expected return, i.e., the value. As such, the stochasticity of $V^\pi$ decreases as data is gathered and $\Phi(P \mid \mathcal{D})$ concentrates around the true transition function $p$.

According to various embodiments, the training is based on a value-distribution function $\mu^\pi: S \to \mathcal{P}(R)$, such

that $V^{\pi}(s) \sim \mu^{\pi}(s)$, $\forall s \in S$. It should be noted that this may be extended to a state-action-value function in a straightforward manner. As such, $\mu^{\pi}$ represents the distribution of the epistemic noise around the expected return of a policy.

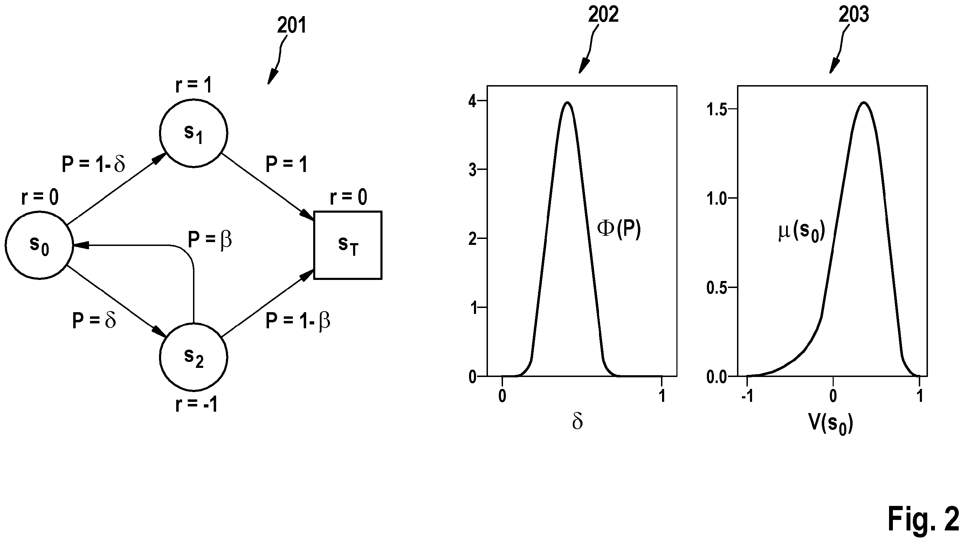

Figure 2 illustrates an example of an MDP 201, a transition function prior 202 and the value distribution 203 it induces.

The MDP has a truncated Gaussian transition probability $\delta \sim \bar{\mathcal{N}}(\mu = 0.4, \sigma = 0.1)$ and a scalar (deterministic) $\beta \in [0; 1]$ which controls the covariance between V ($s_0$) and P($s_2|s_0$); the covariance increases with $\beta$ and is zero for $\beta = 0$. In the example $\beta = 0{:}9$. The prior 202 corresponds directly to the distribution of $\delta$.

It should be noted that the usage of a value distribution function does not correspond to the return-distributional RL setting described above which models the aleatoric noise around the return of a policy. While both value and return distributions aim to obtain a richer representation of complex random variables, only the former characterizes the type of uncertainty which is valuable for effective exploration of the environment.

For the nominal transition kernel $p$, the values at subsequent time steps are related by the Bellman equation

$$v^{\pi,p}(s) = \sum_a \pi(a \mid s) r(s,a) + \gamma \sum_{s',a} \pi(a \mid s) p(s' \mid s,a) v^{\pi}(s'), \quad (4)$$

which holds for any policy $\pi$ and initial state $s \in \mathcal{S}$. The Bellman-style recursion may be extended to account for the distributional nature of the values as follows: let $V^{\pi}$ be the random value function defined in (3). Then, it holds that

$$V^{\pi}(s) = \sum_a \pi(a \mid s) r(s,a) + \gamma \sum_{s',a} \pi(a \mid s) P(s' \mid s,a) V^{\pi}(s'), \quad (5)$$

for any policy $\pi$ and initial state $s \in \mathcal{S}$.

It should be noted that the random variable value-distribution Bellman equation (5) differs from the random variable return-distribution Bellman equation (2) in that the former holds in strict equality, while the latter holds in the weaker notion of equality in distribution. The main caveat of (5) with respect to model-free distributional RL is that, in general, P($s'$| $s,a$) and $V^{\pi}(s')$ are correlated.

In the following, focus is made on the value distribution function rather than the random value function. The main challenge in establishing a recursion for learning $\mu^{\pi}$ is the dependency between $P(s'|s,a)$ and $V^{\pi}(s')$ in (5). In view of this, a family of MDPs is considered under which these random variables are independent, i.e. in the following, the following assumptions are made:

Assumption 1: $P(s' \mid x,a)$ and $P(s' \mid y,a)$ are independent random variables if $x \neq y$.

Assumption 2: For any realization $\bar{p}$ of the random variable P, the MDP $\widetilde{\mathcal{M}}$ with transition function $\bar{p}$ is a directed acyclic graph, i.e., states are not visited more than once in any given episode.

Assumption 1 holds naturally in the case of discrete state-action spaces with a tabular transition function, where there is no generalization. Assumption 2 is non-restrictive as any finite-horizon MDP with cycles can be transformed into an equivalent time-inhomogeneous MDP without cycles by adding a time-step variable $h$ to the state-space. Since the state-space is finite-dimensional, for infinite-horizon problems the existence of a terminal (absorbing) state which is reached in finite steps is considered.

To establish a Bellman-style recursion defining the value distribution function, a notion of push-forward distributions is used. First, it should be noted the matrix-vector notation of the standard Bellman equation: $v^{\pi,p} = r^{\pi} + \gamma p^{\pi} v^{\pi,p}$, where $r^{\pi} \in R^{\mathcal{S}}$, $v^{\pi,p} \in \mathbb{R}^{\mathcal{S}}$ are vectors and $p^{\pi} \in \mathbb{R}^{\mathcal{S} \times \mathcal{S}}_{[0,1]}$ is a so-called stochastic matrix whose entries are restricted to [0,1] and whose rows sum up to 1, i.e., they represent a discrete probability distribution. Accordingly, a bootstrap function applied to value vectors is defined:

$$b_{r,p,\gamma}: v \to r + \gamma p v, \quad (6)$$

for an arbitrary $r \in \mathbb{R}^{\mathcal{S}}, p \in \mathbb{R}^{\mathcal{S} \times \mathcal{S}}_{[0,1]}$ and $\gamma \in [0,1)$. Applying $b_{r,p,\gamma}$ is a combination of adding r to a $\gamma$-scaled linear transformation of the original vector. Now, given a random vector $V \sim v$, the pushforward distribution $(b_{r,p,\gamma})_{\#} v$ is defined to be the distribution resulting from applying the bootstrap function to every possible realization of $V$. Based on this push-forward operation, a Bellman equation for the value distribution function $\mu^\pi$ can be formulated:
the value distribution function $\mu^\pi$ obeys the Bellman equation

$$\mu^\pi = \mathbb{E}_P\left[\left(b_{r^\pi,P^\pi,\gamma}\right)_\# \mu^\pi\right] \tag{7}$$

for any policy $\pi$.

Equation (7) provides a theoretical backbone towards designing an iterative algorithm for learning the value distribution function. From (7) an operator that acts on arbitrary value distribution functions can be extracted: the value-distributional Bellman operator $\mathcal{T}^\pi : \mathcal{P}(\mathbb{R})^{\mathcal{S}} \to \mathcal{P}(\mathbb{R})^{\mathcal{S}}$ is defined by

$$\mathcal{T}^\pi \mu = \mathbb{E}_P\left(b_{r^\pi,P^\pi,\gamma}\right)_\# \mu \tag{8}$$

Intuitively, the operator $\mathcal{T}^\pi$ corresponds to mixing pushforward distributions, where the pushforward itself involves shifting, scaling and linearly transforming the probability mass. The natural question that follows is whether convergence to $\mu^\pi$ can be established by repeated applications of $\mathcal{T}^\pi$ starting from an arbitrary initial guess $\mu_0$. In fact, the supremum $p$-Wasserstein distance can be used to establish contractivity of the operator $\mathcal{T}^\pi$.

For $p \in [1, \infty)$, the p-Wasserstein distance between two distributions $v$, $v'$ is a metric $w_p : \mathcal{P}(\mathbb{R}) \times \mathcal{P}(\mathbb{R}) \to [0, \infty]$ defined by

$$w_p(\nu, \nu') = \left(\int_0^1 \left|F_\nu^{-1}(\tau) - F_{\nu'}^{-1}(\tau)\right|^p d\tau\right)^{1/p} \tag{9}$$

where $F_{(\cdot)}^{-1}$ is the inverse cumulative distribution function. Furthermore, the supremum p-Wasserstein distance $\overline{w}_p$ between two value distribution functions $\mu, \mu' \in \mathcal{P}(\mathbb{R})^{\mathcal{S}}$ is defined by $\overline{w}_p(\mu,\mu') = \sup_{s \in S} w_p(\mu(s), \mu'(s))$.

It can be shown that the operator $\mathcal{T}^\pi$ is a $\gamma$-contraction with respect to $\overline{w}_p$ for all $p \in [1, \infty)$. That is, $\overline{w}_p(\mathcal{T}^\pi \mu, \mathcal{T}^\pi \mu') \leq \gamma\, \overline{w}_p(\mu, \mu')$ for all $\mu, \mu' \in \mathcal{P}(\mathbb{R})^{\mathcal{S}}$.

This allows establishing the convergence of iterated applications of $\mathcal{T}^\pi$ and characterizing the operator's fixed-point: denote the space of value distribution functions with bounded support by $\mathcal{P}_B(\mathbb{R})^{\mathcal{S}}$. It can be shown that given an arbitrary value distribution function $\mu_0 \in \mathcal{P}_B(\mathbb{R})^{\mathcal{S}}$, the sequence $\{\mu_k\}_{k=0}^\infty$ defined by $\mu_{k+1} = \mathcal{T}^\pi \mu_k$ for all $k \geq 0$ is such that $\overline{w}_p(\mu_k,\mu^\pi) \leq \gamma^k \overline{w}_p(\mu_0,\mu^\pi) \to 0$ as $k \to \infty$ for $p \in [1, \infty)$. That is, $\mu^\pi$ is the unique fixed-point of the value-distribution Bellman operator $\mathcal{T}^\pi$.

So, repeated applications of $\mathcal{T}^\pi$ from an arbitrary initial (bounded) guess for the value distribution converges to the value distribution function $\mu^\pi$. In the following, a practical algorithm for learning the value-distribution function based on this is described.

For the practical algorithm to implement such a recursion the value distributions are projected to a finite-dimensional parameter space. According to various embodiments, a quantile parameterization is used: let $\mathcal{V}_M$ be the space of quantile distributions with fixed M quantiles corresponding to quantile levels $\tau_i = \dfrac{2i-1}{2M}$. Define a parametric model $\theta : \mathcal{S} \to \mathbb{R}^M$, then the quantile distribution $\mu_\theta \in \mathcal{V}_M$ maps states to a uniform probability distribution supported

on $\theta_i(s)$. That is, $\mu_\theta(s) = \sum_{i=1}^{M} \frac{1}{M} \delta \theta_i(s)$ given by a uniform mixture of Dirac deltas, where the particle $\theta_i(s)$ corresponds to the $\tau_i$-quantile. With this parameterization, the so-called quantile projection of $\mu^\pi$ onto $\mathcal{V}_M$, given by

$$\Pi_{w_1} \mu^\pi := \operatorname{argmin}_{\mu_\theta \in \mathcal{V}_M} w_1(\mu^\pi, \mu_\theta), \qquad (10)$$

is calculated, where $w_1$ is the 1-Wasserstein distance.

In order to solve (10), a quantile-regression temporal-difference learning approach is used. The following loss function corresponds to the quantile-regression problem of estimating the quantile $\tau$ of the value distribution $\mu^\pi$:

$$\mathcal{L}_s^{\tau,\pi}(v) = \mathbb{E}_P[\tau \mathbb{1}\{V^\pi(s) > v\} + (1-\tau)\mathbb{1}\{V^\pi(s) < v\}|V^\pi(s) - v|]. \qquad (11)$$

It is an asymmetric convex loss function whose minimizer is the $\tau$-quantile of $\mu^\pi$, where quantile overestimation and underestimation errors are weighted by $\tau$ and $1 - \tau$, respectively.

According to various embodiments, a practical algorithm to learn the value distribution function based on the quantile-regression loss of (11) is provided. If samples of $V^\pi(s)$, denoted $\tilde{v}^\pi(s)$, are available, an unbiased estimate of the negative gradient of (11) can be derived and the update rule

$$\theta_i(s) \leftarrow \theta_i(s) + \alpha(\tau_i - \mathbb{1}\{\tilde{v}^\pi(s) < \theta_i(s)\}), \qquad (12)$$

can be derived where $\alpha$ is a scalar step size. One option to sample $V^\pi = \tilde{v}^\pi$ would be to first sample a model $P = \tilde{p}$ and then solve the corresponding Bellman equation. Alternatively, a computationally cheaper alternative is to bootstrap like in temporal-difference learning, so that the samples are defined as

$$\tilde{v}^\pi(s) = r^\pi(s) + \gamma \sum_{s'} \tilde{p}^\pi(s' \mid s)\theta_J(s'), \qquad (13)$$

where $J \sim \text{Uniform}(1, ..., M)$. The variance of the gradient estimate is reduced by averaging over the values of $J$, which results in the update

$$\theta_i(s) \leftarrow \theta_i(s) + \frac{\alpha}{M}\sum_{j=1}^{M}\left(\tau_i - \mathbb{1}\{r^\pi(s) + \gamma \sum_{s'}\tilde{p}^\pi(s' \mid s)\theta_j(s') < \theta_i(s)\}\right).$$

$$(14)$$

Algorithm 1 as given as follows is an example for iteratively learning the value distribution function $\mu^\pi$.

---

1: **Input:** Posterior MDP $\Phi$, policy $\pi$, number of quantiles $M$.
2: Randomly initialize estimates $\left\{\theta_i(s)\right\}_{i=1}^{M}$ for all $s \in \mathcal{S}$
3: **repeat**
4:    Sample $\tilde{p}$ from posterior $\Phi$
5:    **for** $i = 1, \ldots, M$ **do**
6:       Update $\theta_i(s)$ with (14) for all $s \in \mathcal{S}$
7: **until** convergence
8: **return** $\left\{\theta_i(s)\right\}_{i=1}^{M}$

---

Algorithm 1: Value-Quantile Temporal-Difference Learning

From an arbitrary initial guess of quantiles, an MDP is sampled from the posterior and the quantiles are updated using (14) for all states until convergence.

The above approach of learning a value distribution function (or specifically "epistemic quantile regression") can for example be combined with a SAC (soft actor critic) RL approach to obtain a model-based reinforcement learning method that leverages a value-distributional critic for policy optimization. The key ingredients of this method are: (1) an ensemble-based posterior over MDPs, (2) a quantile-distributional critic network that models the *M*-quantile function $\theta(s,a)$ and (3) a policy network $\pi_\phi$ (i.e. actor) trained to optimize some differentiable function of the critic.

Regarding the ensemble-based posterior over MDPs, the posterior MDP, denoted $\Gamma_\psi$, is for example represented as an ensemble of N neural networks trained via supervised learning on the environment dataset $\mathcal{D}$ to predict the mean and variance of a Gaussian distribution over next states and rewards. The posterior MDP $\Gamma_\psi$ is used to populate an experience replay buffer $\mathcal{D}_{\text{model}}$ with model-consistent /c-step rollouts; that is, a consistent ensemble member is used throughout a rollout, rather than randomizing the model per-step. Model-consistent rollouts help disentangle aleatoric and epistemic uncertainties.

The critic is trained on mini-batches drawn from $\mathcal{D}_{\text{model}}$, using the entropy regularization loss from SAC with temperature $\alpha$ and replacing the quantile regression loss with the quantile Huber loss $\rho_\tau(u)$:

$$\mathcal{L}_{\text{critic}}(\theta) = \mathbb{E}_{(S,A)\sim\mathcal{D}_{\text{model}}}\left[\mathbb{E}_{(\hat{R},\hat{P})\sim\Gamma_\psi}\left[\sum_{i=1}^{M}\mathbb{E}_J\left[\rho_{\tau_i}\mathcal{T}\theta_J(S,A) - \theta_i(S,A)\right]\right]\right],$$

$$(15)$$

where the target quantiles $\mathcal{T}\theta_j$ are defined as

$$\mathcal{T}\theta_j(s,a) = \hat{R}(s,a) + \gamma\mathbb{E}_{(S',A')\sim\hat{P}(\cdot|S,a),\pi_\phi}\left[\theta_j(S',A') - \alpha\log\pi_\phi(A'\mid S')\right].$$

$$(16)$$

The expectation in (16) is approximated by generating transition tuples ($s'$,$a'$) using the policy and the sampled dynamics from $\Gamma_\psi$. Typically, model-based algorithms only use data in the mini-batch to compose critic targets, rather than leveraging the learned dynamics model for better approximation of expectations.

The control policy (i.e. the actor) is trained to maximize some differentiable utility function *f* of the quantile critic, in addition to the entropy regularization term from SAC,

$$\mathcal{L}_{actor}(\phi) = \mathbb{E}_{S\sim\mathcal{D}_{model}}\left[\mathbb{E}_{A\sim\pi_\phi}\left[f\left(\theta(S,A)\right) - \alpha log\pi_\phi(A\mid S)\right]\right]. \quad (17)$$

Let $\overline{\theta}(s,a)$ and $\sigma_\theta(s,a)$ be the mean and standard deviations of the quantiles, respectively. Then, two concrete utility functions that may be considered are the classical mean objective $f_{\text{mean}}(\theta(s,a)) = \overline{\theta}(s,a)$ and an objective based on optimism in the face of uncertainty $f_{\text{ofu}} = \overline{\theta}(s,a) + \sigma_\theta(s,a)$.

Algorithm 2 gives an example of the SAC RL with EQR.

```
 1: Initialize policy π_φ, MDP ensemble Γ_ψ, quantile critic θ, environment dataset 𝒟, model dataset
    𝒟_model, utility function f.
 2: Warm-up 𝒟 with rollouts under π_φ
 3: global step ← 0
 4: for episode t = 0, ..., T − 1 do
 5:    for E steps do
 6:       if global step % F == 0 then
 7:          Train Γ_ψ on 𝒟 via maximum likelihood
 8:          for each MDP dynamics in Γ_ψ do
 9:             for L model rollouts do
10:                Perform k-step rollouts starting from s ∼ 𝒟; add to 𝒟_model
11:       Take action in environment according to π_φ; add to 𝒟
12:       for G gradient updates do
13:          Update {θ_i}_{i=1}^M with mini-batches from 𝒟_model, via SGD on (15)
14:          Update π_φ with mini-batches from 𝒟_model, via SGD on (17)
15:       global step ← global step +1
```

**Algorithm 2: Epistemic Quantile-Regression Soft Actor-Critic**

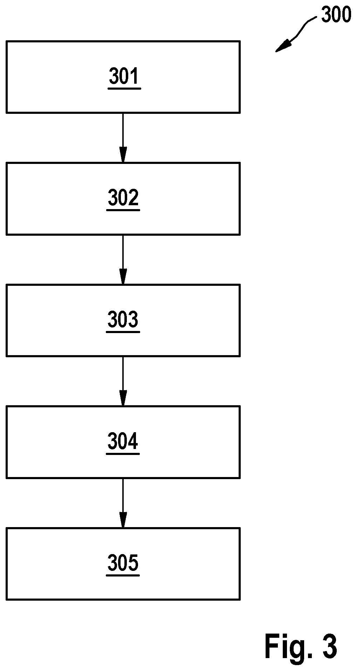

According to various embodiments, a method is provided as illustrated in figure 3.

Figure 3 shows a flow diagram 300 illustrating a method for training a control policy for controlling a technical system.

In 301, the technical system is controlled (at least partially according to the control policy (i.e. a current version of the control policy) but the controlling may also include exploration and thus control actions which may not be given by the control policy) and state transitions of the technical system in response to controlling the technical system and rewards received from the state transitions are observed.

In 302, a transition dynamic distribution model (established and initialized earlier) modelling a distribution of the dynamics of the technical system is adapted (this may for example include conditioning a prior of the transition dynamic distribution model on the collected data to determine a posterior of the transition dynamic distribution model (denoted by Φ in the example described herein)) to the observed state transitions.

In 303, a transition dynamic is sampled from the transition dynamic distribution model (this may for example be as simple as uniformly choosing a transition dynamic model from an ensemble of transition dynamic models (e.g. neural networks).

In 304, a value function distribution model (established and initialized earlier) modelling a distribution of a value function of states or state-action pairs of the technical system by estimating the value of a state is updated using the sampled transition dynamic

In 305, the control strategy is updated using the updated value function distribution model.

Steps 301 to 305 may be repeatedly carried out, e.g. each iteration corresponds to a batch or several rollouts may be carried out (according to 301) and then batches are taken from the gathered data to update the control policy etc.

The approach of figure 3 can be used to compute a control signal for controlling a technical system, like e.g. a computer-controlled machine, like a robot, a vehicle, a domestic appliance, a power tool, a manufacturing machine, a personal assistant or an access control system (and, depending on the application, the environment of the respective device, which may include other technical devices). According to various embodiments, a policy for controlling the technical system may be learnt and then the technical system may be operated accordingly.

Various embodiments may receive and use image data (i.e. digital images) from various visual sensors (cameras) such as video, radar, LiDAR, ultrasonic, thermal imaging, motion, sonar etc., for obtaining a discrete or continuous signal that provides information about the environment, for example to obtain observations about the states (and thus state transitions) and/or rewards.

The method of Figure 3 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

**Claims**

1.  A method for training a control policy for controlling a technical system (100), comprising:

    Controlling the technical system (100) and observing state transitions of the technical system (100) in response to controlling the technical system (100) and observing rewards received from the state transitions;
    Adapting a transition dynamic distribution model modelling a distribution of the dynamics of the technical system (100) to the observed state transitions;
    Sampling a transition dynamic from the transition dynamic distribution model;
    Updating a value function distribution model modelling a distribution of a value function of states or state-action pairs of the technical system (100) by estimating the value of a state using the sampled transition dynamic; and
    Updating the control strategy using the updated value function distribution model.

2.  The method of claim 1, wherein the value function distribution model is updated by estimating the value of a state as a sum of a reward observed when entering the state with a state transition and a discounted sum of values of subsequent states sampled from the value function distribution model, wherein each sampled value is weighed by a probability given by the sampled dynamics model that the subsequent state is reached.

3.  The method of claim 1 or 2, wherein the value function distribution model is a quantile distribution which maps each of the states to a uniform probability distribution supported on estimates of quantiles of the value of the state.

4.  The method of any one of claims 1 to 3, wherein updating the control strategy using the updated value function distribution model comprises using the updated value function distribution model for a critic of a actor-critic reinforcement learning scheme, wherein the actor corresponds to the control strategy.

5.  The method of any one of claims 1 to 4, wherein the transition dynamic distribution model comprises an of neural networks, each neural network implementing a respective transition dynamic model.

6.  A method for controlling a technical system (100), comprising training a control policy according to any one of claims 1 to 5 and controlling the technical system (100) according to the trained control policy.

7.  A controller (105), configured to perform a method of any one of claims 1 to 6.

8.  A computer program comprising instructions which, when executed by a computer, makes the computer perform a method according to any one of claims 1 to 6.

9.  A computer-readable medium comprising instructions which, when executed by a computer, makes the computer perform a method according to any one of claims 1 to 6.

Fig. 1

Fig. 2

300

301

302

303

304

305

**Fig. 3**

Europäisches
Patentamt

European
Patent Office

Office européen
des brevets

# EUROPEAN SEARCH REPORT

**Application Number**

EP 23 18 9842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIEN NGO ANH ET AL: "Bayes-adaptive hierarchical MDPs", APPLIED INTELLIGENCE, KLUWER ACADEMIC PUBLISHERS, DORDRECHT, NL, vol. 45, no. 1, 29 January 2016 (2016-01-29), pages 112-126, XP035899580, ISSN: 0924-669X, DOI: 10.1007/S10489-015-0742-2 [retrieved on 2016-01-29] * the whole document * | 1-9 | INV. G06N3/092 G06N20/20 |
| X | ROSS S ET AL: "Bayesian reinforcement learning in continuous POMDPs with application to robot navigation", 2008 IEEE INTERNATIONAL CONFERENCE ON ROBOTICS AND AUTOMATION. THE HALF-DAY WORKSHOP ON: TOWARDS AUTONOMOUS AGRICULTURE OF TOMORROW; PASADENA, CA, USA, MAY 19-23, 2008, IEEE, PISCATAWAY, NJ, USA, 19 May 2008 (2008-05-19), pages 2845-2851, XP031340585, ISBN: 978-1-4244-1646-2 * the whole document * | 1-9 | |
| X | CARLOS E LUIS ET AL: "Model-Based Uncertainty in Value Functions", ARXIV.ORG, CORNELL UNIVERSITY LIBRARY, 201 OLIN LIBRARY CORNELL UNIVERSITY ITHACA, NY 14853, 7 March 2023 (2023-03-07), XP091454186, * the whole document * | 1-9 | |

**TECHNICAL FIELDS SEARCHED (IPC)**

G06N

The present search report has been drawn up for all claims

| Place of search | Date of completion of the search | Examiner |
|---|---|---|
| The Hague | 4 January 2024 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)